# EUROPÄISCHE PATENTSCHRIFT

(11) **EP 0 593 392 B1**
(45) Veröffentlichungstag und Bekanntmachung des Hinweises auf die Patenterteilung: **24.07.1996**
(21) Anmeldenummer: 93810669.7
(22) Anmeldetag: 21.09.1993
(51) Int. Cl.: D06P 1/607, D06P 3/82, C09B 67/22

(54) **Verfahren zum Färben von natürlichen und synthetischen Polyamidfasermaterialien mit Farbstoffmischungen**
Process for dyeing of natural and synthetic polyamide fibers with dye mixtures
Procédé de teinture de fibres polyamides naturelles et synthétiques avec des mélanges de colorants

(30) Priorität: 30.09.1992 CH 3048/92
(43) Veröffentlichungstag der Anmeldung: 20.04.1994
(73) Patentinhaber: CIBA-GEIGY AG, 4002 Basel (CH)
(72) Erfinder: De Meulemeester, Christian, CH-4123 Allschwil (CH); Runser, Patrick, F-68730 Michelbach-le-Bas (FR)

(56) Entgegenhaltungen:
- EP-A- 0 089 004
- EP-A- 0 135 198
- EP-A- 0 163 608
- EP-A- 0 181 292
- EP-A- 0 387 201
- EP-A- 0 443 631
- WO-A-80/01577
- GB-A- 2 017 135

## Beschreibung

Die der vorliegenden Erfindung zugrunde liegende Aufgabe war es, ein Verfahren zum Färben von natürlichen und synthetischen Polyamidfasermaterialien zu finden, welches Färbungen von guter Egalität bei guten Echtheitseigenschaften liefert und womit beide Faserarten von Wolle/Polyamid-Mischgeweben Ton-in-Ton gefärbt werden können. Weiterhin soll das Verfahren zum Trichromie-Färben geeignet sein.

Es wurde nun gefunden, dass das nachstehende Verfahren die genannten Anforderungen erfüllt.

Gegenstand der vorliegenden Erfindung ist somit ein Verfahren zum Färben von Fasermaterialien aus natürlichem oder synthetischem Polyamid aus wässriger Flotte, in Gegenwart eines Egalisierhilfsmittels und gegebenenfalls in Gegenwart eines Alkali- oder Ammoniumfluorosilikats, welches dadurch gekennzeichnet ist, dass man eine Mischung der Farbstoffe der Formeln (1), (2) und (3) 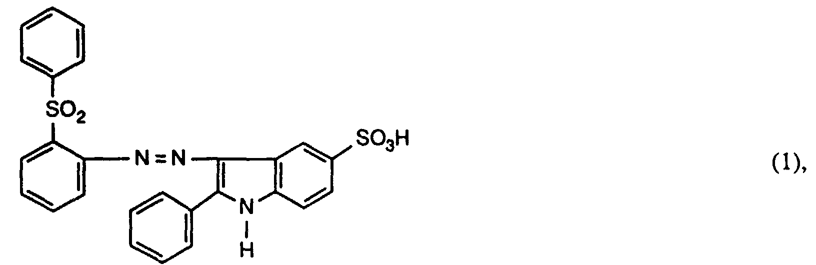 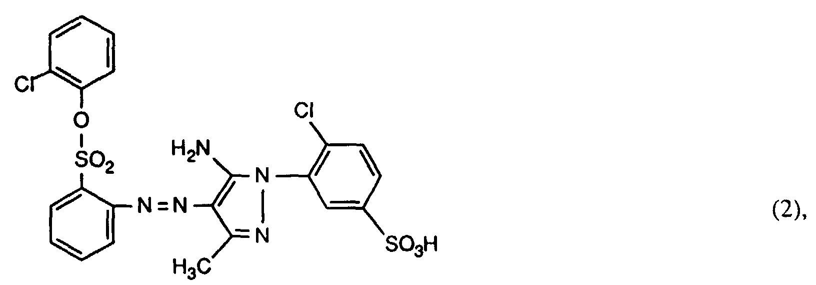 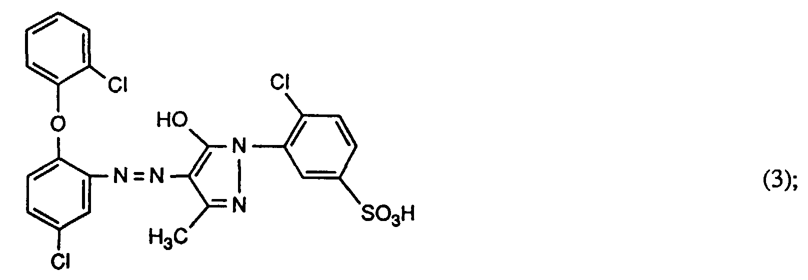 oder eine Mischung der Farbstoffe der Formeln (4) und (5) 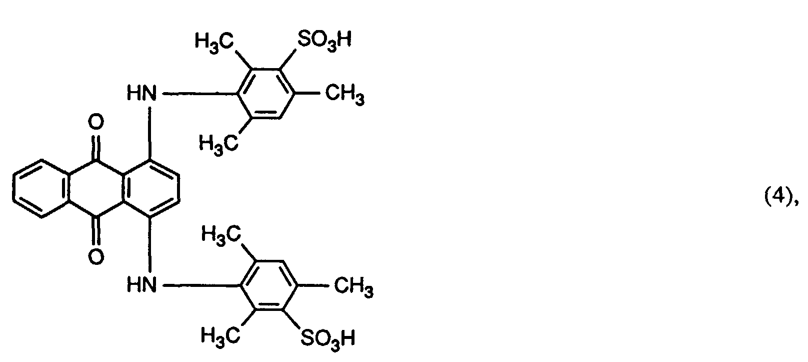 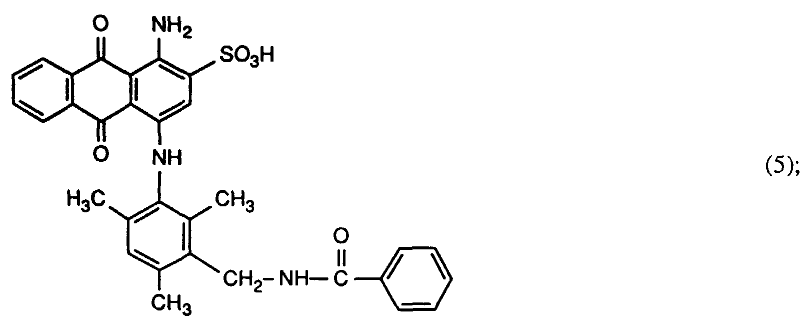 oder eine Mischung, welche einen Farbstoff der Formel (6) 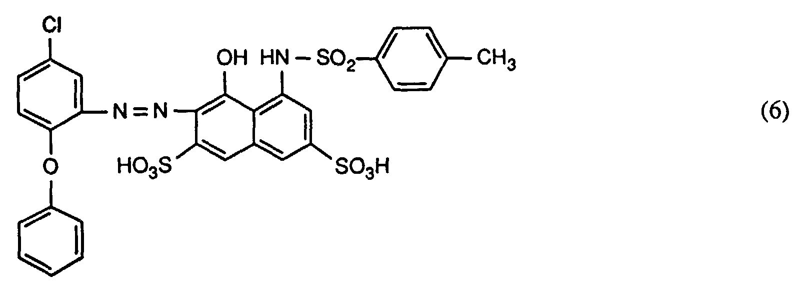 zusammen mit mindestens einem Farbstoff der Formeln (7), (8) und (9) 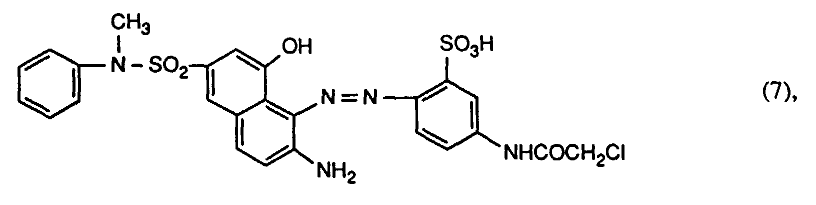 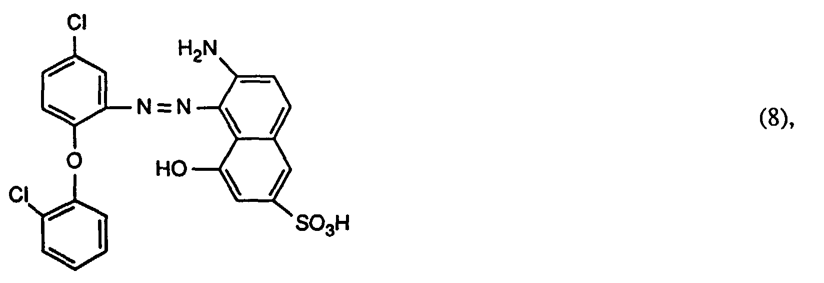 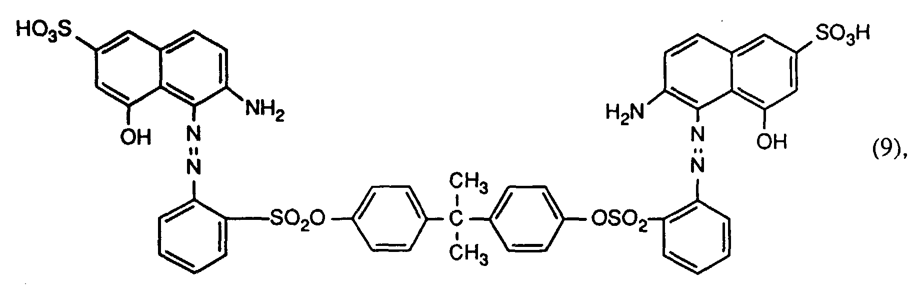 enthält, verwendet.

Als Egalisierhilfsmittel kommen vorzugsweise solche in Betracht, welche eine Verbindung der Formel 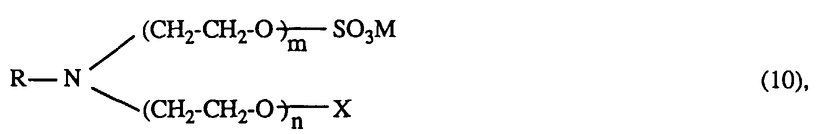 worin X Wasserstoff oder einen Rest der Formel -SO₃M, R einen Alkyl- oder Alkenylrest mit 12 bis 24 Kohlenstoffatomen, M Wasserstoff, Alkalimetall oder Ammonium und m und n ganze Zahlen bedeuten, wobei die Summe von m und n 2 bis 20 ist, 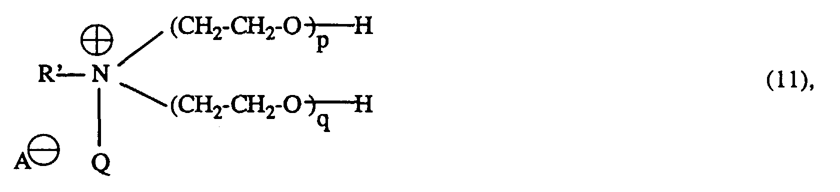 worin R' unabhängig von R die für R angegebene Bedeutung hat, A ein Anion, Q einen gegebenenfalls substituierten Alkylrest und p und q ganze Zahlen bedeuten, wobei die Summe von p und q 2 bis 50 ist, und 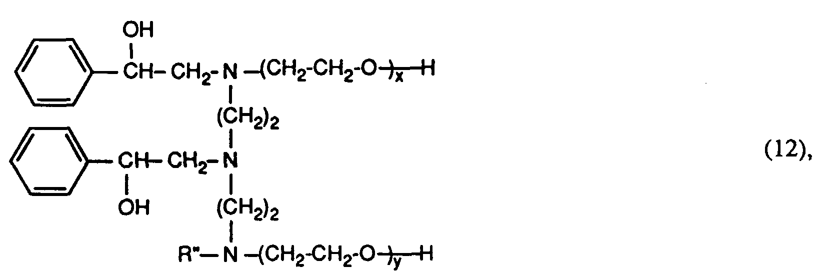 worin R'' unabhängig von R die für R angegebene Bedeutung hat und x und y ganze Zahlen bedeuten, wobei die Summe von x und y 80 bis 140 ist, enthalten; oder welche eine Verbindung der Formel 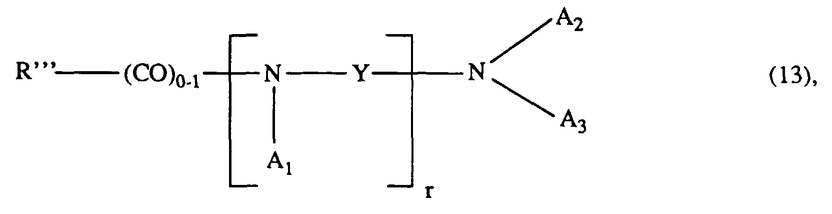 worin R''' C₁₂-C₃₀-Alkyl oder C₁₂-C₃₀-Alkenyl, Y C₂-C₃-Alkylen ist, A₁, A₂ und A₃ jeweils der Rest einer Aethylenoxidanlagerungskette oder Aethylenoxid/C₃-C₄-Alkylenoxidanlagerungskette, gegebenenfalls unter Anlagerung von Styroloxid, sind, wobei die Verbindung der Formel (13) 3 bis 200 Aethylenoxyeinheiten, 0 bis 100 C₃-C₄-Alkylenoxyeinheiten und gegebenenfalls bis 5 Styroloxyeinheiten enthält, und r 0 oder eine Zahl von 1 bis 6 ist, enthalten.

Für X in der Verbindung der Formel (10) kommt vorzugsweise Wasserstoff in Betracht.

R, R', R'' und R''' sind unabhängig voneinander bevorzugt ein Alkyl- oder Alkenylrest mit 16 bis 22 Kohlenstoffatomen.

Die Summe von n und m in der Verbindung der Formel (10) ist bevorzugt 6 bis 16.

Die Summe von p und q in der Verbindung der Formel (11) ist bevorzugt 6 bis 40.

Die Summe von x und y in der Verbindung der Formel (12) ist bevorzugt 100 bis 110.

Für Q kommt z.B. C₁-C₄-Alkyl, wie Methyl, Aethyl, n-Propyl, Isopropyl, n-Butyl, Isobutyl, sek.-Butyl und tert.-Butyl, sowie -CH₂-CO-NH₂, -CH₂-CH(OH)-CH₂Cl oder -CH₂-CH(OH)Cl, vorzugsweise Methyl oder -CH₂-CO-NH₂, in Betracht.

Als Anionen A⁻ kommen z.B. solche in Betracht, welche sich von Quarternierungsmitteln, wie z.B. Acetylbromid, Aethylbromid, Aethylenchlorhydrin, Aethylenbromhydrin, Epichlorhydrin, Epibromhydrin, Dimethylsulfat, Diäthylsulfat oder Chloracetamid, ableiten, in Betracht.

Als Verbindungen der Formel (10) verwendet man vorzugsweise solche, worin X Wasserstoff ist, die Summe von n und m 10 bis 16 ist und R ein Alkyl- oder Alkenylrest mit 16 bis 22 Kohlenstoffatomen ist.

Als Verbindungen der Formel (11) verwendet man vorzugsweise solche, worin Q Methyl, die Summe von p und q 30 bis 40 ist und R' ein Alkyl- oder Alkenylrest mit 16 bis 22 Kohlenstoffatomen ist, oder worin Q den Rest -CH₂-CO-NH₂ bedeutet, die Summe von p und q 5 bis 10 ist und R' ein Alkyl- oder Alkenylrest mit 16 bis 22 Kohlenstoffatomen ist.

Als Verbindungen der Formel (12) verwendet man vorzugsweise solche, worin die Summe von x und y 100 bis 110 und R'' ein Alkyl- oder Alkenylrest mit 16 bis 22 Kohlenstoffatomen ist.

Insbesondere verwendet man Egalisierhilfsmittel enthaltend 5 bis 70 Gewichtsteile der Verbindung der Formel (10), 15 bis 60 Gewichtsteile der Verbindung der Formel (11) und 5 bis 60 Gewichtsteile der Verbindung der Formel (12), bezogen auf 100 Gewichtsteile des Egalisierhilfsmittelgemisches.

Besonders bevorzugt verwendet man eine Verbindung der Formel (10) zusammen mit einer Verbindung der Formel (11), worin Q Methyl ist, einer Verbindung der Formel (11), worin Q der Rest -CH₂-CO-NH₂ ist, und einer Verbindung der Formel (12), wobei für die Verbindungen der Formeln (10), (11) und (12) die oben genannten Bevorzugungen gelten.

A₁, A₂ und A₃ in der Verbindung der Formel (13) sind bevorzugt Aethylenoxyreste.

Y in der Verbindung der Formel (13) ist vorzugsweise n-Propylen.

Für r in der Verbindung der Formel (13) ist die Zahl 1 bevorzugt.

R''' in der Verbindung der Formel (13) ist vorzugsweise ein Alkyl- oder Alkenylrest mit 16 bis 22 Kohlenstoffatomen, insbesondere 22 Kohlenstoffatomen.

Besonders bevorzugte Verbindungen der Formel (13) sind solche der Formel 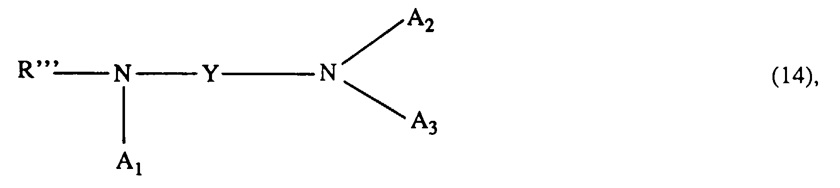 worin für A₁, A₂ und A₃, Y und R''' die oben angegebenen Bedeutungen und Bevorzugungen gelten.

Die Mengen, in denen das Egalisierhilfsmittel in den Färbebädern verwendet wird, kann in weiten Grenzen schwanken, im allgemeinen hat sich eine Menge von 0,3 bis 5 Gewichtsprozent, insbesondere 0,5 bis 4 Gewichtsprozent und vorzugsweise 1 bis 2 Gewichtsprozent, bezogen auf das Fasermaterial, als vorteilhaft erwiesen.

Als Alkali- oder Ammoniumfluorosilikate können in dem erfindungsgemässen Verfahren z.B. Alkali- oder Ammoniumsalze der Hexafluorokieselsäure oder deren Mischungen verwendet werden. Bevorzugte Salze sind Na₂SiF₆ oder insbesondere (NH₄)₂SiF₆.

Die Mengen, in denen die Alkali- oder Ammoniumfluorosilikate in den Färbebädern verwendet werden, betragen vorzugsweise 5 bis 100 Gewichtsprozent, bezogen auf die eingesetzte Menge des Egalisierhilfsmittels, und vorzugsweise 5 bis 40%.

Verwendet man ein Egalisierhilfsmittel der Formel (13), so erfolgt das Färben vorzugsweise ohne Gegenwart eines Alkali- oder Ammoniumfluorosilikats.

Als Mischung, welche einen Farbstoff der Formel (6) zusammen mit mindestens einem Farbstoff der Formeln (7), (8) und (9) enthält, verwendet man bevorzugt eine Mischung des Farbstoffes der Formel (6) mit einem Farbstoff der Formel (7), oder eine Mischung des Farbstoffes der Formel (6) mit einem Farbstoff der Formel (8) und einem Farbstoff der Formel (9).

Die Einzelkomponenten der Farbstoffmischungen sind vorzugsweise jeweils in einer Menge von 1 bis 95 Teilen, bezogen auf 100 Teile der Farbstoffmischung, enthalten.

Die Mischung der Farbstoffe der Formeln (1), (2) und (3) enthält bevorzugt 1 bis 20 Teile des Farbstoffs der Formel (1), 5 bis 50 Teile des Farbstoffs der Formel (2) und 40 bis 90 Teile des Farbstoffs der Formel (3), bezogen auf 100 Teile der Farbstoffmischung.

Die Mischung der Farbstoffe der Formeln (4) und (5) enthält bevorzugt 10 bis 90 Teile des Farbstoffs der Formel (4) und 10 bis 90 Teile des Farbstoffs der Formel (5), bezogen auf 100 Teile der Farbstoffmischung.

Die Mischung der Farbstoffe der Formeln (6) und (7) enthält bevorzugt 5 bis 40 Teile des Farbstoffs der Formel (6) und 60 bis 95 Teile des Farbstoffs der Formel (7), bezogen auf 100 Teile der Farbstoffmischung.

Die Mischung der Farbstoffe der Formeln (6), (8) und (9) enthält bevorzugt 5 bis 50 Teile des Farbstoffs der Formel (6), 10 bis 70 Teile des Farbstoffs der Formel (8) und 5 bis 50 Teile des Farbstoffs der Formel (9).

Die Farbstoffe der Formeln (1) bis (9) liegen entweder in der Form ihrer freien Sulfonsäure oder vorzugsweise als deren Salze wie z.B. der Alkali-, Erdalkali- oder Ammoniumsalze oder als Salze eines organischen Amins vor. Als Beispiele seien die Natrium-, Lithium- oder Ammoniumsalze oder das Salz des Triäthanolamins genannt.

Die Farbstoffe der Formeln (1) bis (9) und die Egalisierhilfsmittel der Formeln (10), (11), (12) und (13) sind bekannt oder können in Analogie zu bekannten Verfahren erhalten werden.

Die Mengen, in denen die definierten Farbstoffmischungen in den Färbebädern verwendet werden, können je nach der gewünschten Farbtiefe in weiten Grenzen schwanken, im allgemeinen haben sich Mengen von 0,01 bis 10 Gewichtsprozent, bezogen auf das Fasermaterial, als vorteilhaft erwiesen.

Das Färben erfolgt vorzugsweise bei einem pH-Wert von 3 bis 7, insbesondere einem pH-Wert von 3 bis 5 und besonders bevorzugt bei einem pH-Wert von 3 bis 4.

Die Färbebäder können neben den genannten Hilfsmitteln noch weitere übliche Zusätze, wie z.B. Wollschutz-, Netz- und Entschäumungsmittel enthalten.

Das Flottenverhältnis kann innerhalb eines weiten Bereichs gewählt werden, von 1:5 bis 1:80, insbesondere 1:8 bis 1:25.

Das Färben erfolgt in der Regel aus wässriger Flotte z.B. bei Temperaturen von 80 bis 105°C, bzw. 110°C bei Verwendung eines formaldehydabspaltenden Wollschutzmittels; vorzugsweise bei einer Temperatur zwischen 95 und 103°C. Bevorzugt ist das Färben nach der Ausziehmethode.

Die Färbedauer beträgt in der Regel 30 bis 120 Minuten, vorzugsweise 60 bis 120 Minuten.

Besondere Vorrichtungen sind beim erfindungsgemässen Verfahren nicht erforderlich. Es können die üblichen Färbeapparate und -maschinen, beispielsweise für Flocke, Kammzug, Stranggarn, Wickelkörper, Stückware und Teppiche verwendet werden.

Das erfindungsgemässe Verfahren eignet sich zum Färben sowohl von natürlichen Polyamidfasermaterialien, wie z.B. Seide oder insbesondere Wolle, als auch von synthetischen Polyamidfasermaterialien, wie z.B. Polyamid 6 oder Polyamid 6.6 und es ist geeignet zum Färben von Woll- und synthetischen Polyamid-Mischgeweben oder Garnen. Besonders bevorzugt ist das Färben von Wolle und Woll- und synthetischen Polyamid-Mischungen.

Das genannte Textilmaterial kann dabei in den verschiedensten Verarbeitungsformen vorliegen, wie z.B. als Faser, Garn, Gewebe, Gewirke und in Form von Teppichen.

Eine besonders bevorzugte Ausführungsform des erfindungsgemässen Verfahren stellt ein Verfahren zum Trichromiefärben dar, welches dadurch gekennzeichnet ist, dass man eine gelb- oder orangefärbende Mischung der Farbstoffe der Formeln (1), (2) und (3) zusammen mit einer blaufärbenden Mischung der Farbstoffe der Formeln (4) und (5) und einer rotfärbenden Mischung, welche den Farbstoff der Formel (6) zusammen mit mindestens einem Farbstoff der Formeln (7), (8) und (9) enthält, verwendet. Unter Trichromie ist dabei die additive Farbmischung von passend gewählten gelb-, rot- und blaufärbenden Farbstoffen in den zur Erzielung der gewünschten Nuance notwendigen Mengen zu verstehen. Für die Mischungen der Farbstoffe gelten hierbei die oben genannten Bevorzugungen.

Einen weitereren Gegenstand der vorliegenden Erfindung stellt die Mischung der Farbstoffe der Formeln (1), (2) und (3), sowie die Mischung der Farbstoffe der Formeln (4) und (5), und weiterhin die Mischung, welche den Farbstoff der Formel (6) zusammen mit mindestens einem Farbstoff der Formeln (7), (8) und (9) enthält, dar. Für die Mischungen der Farbstoffe gelten hierbei die oben genannten Bevorzugungen.

Die erfindungsgemässen Farbstoffmischungen zeichnen sich durch allgemein gute Eigenschaften wie z.B. gute Echtheiten, gute Löslichkeit, gutes Aufziehverhalten und insbesondere durch gute Kombinierbarkeit mit anderen Farbstoffen bzw. Farbstoffmischungen aus.

Das erfindungsgemässe Verfahren liefert Farbungen von sehr guter Egalität bei guten Echtheitseigenschaften. Beim Färben von Wolle/Polyamid-Mischgeweben können beide Faserarten Ton-in-Ton gefarbt werden. Weiterhin zeichnet sich das erfindungsgemässe Verfahren insbesondere beim Trichromie-Färben durch gleichmässigen Farbaufbau, gutes Aufziehverhalten und gute Nuancenkonstanz auch in verschiedenen Konzentrationen aus.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

### Beispiel 1a):

Zur Herstellung einer gelbfärbenden Farbstoffmischung werden in einem Mixer
80 Teile des in Form der freien Säure angegebenen Farbstoffs der Formel 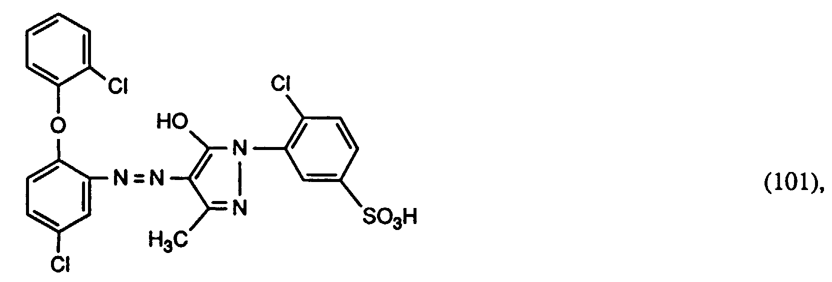 15 Teile des in Form der freien Säure angegebenen Farbstoffs der Formel 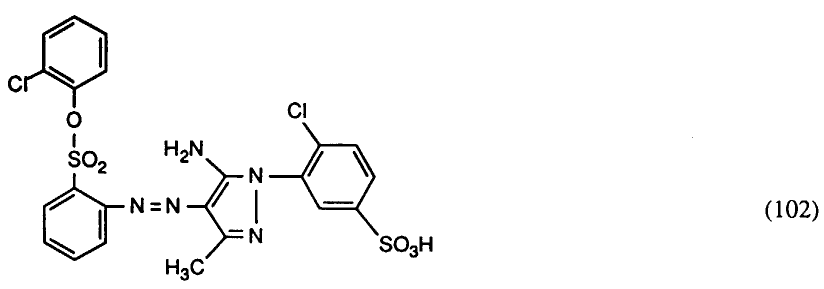 5 Teile des in Form der freien Säure angegebenen Farbstoffs der Formel 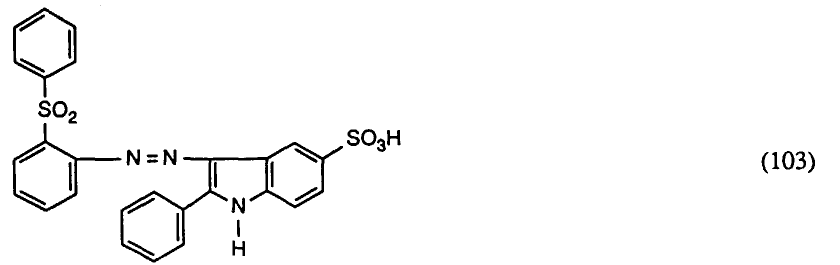 homogen gemischt und ergeben 100 Teile der Mischung, die im folgenden als Farbstoffmischung A bezeichnet wird.

### Beispiel 1b):

Zur Herstellung einer rotfärbenden Farbstoffmischung werden in einem Mixer
82 Teile des in Form der freien Säure angegebenen Farbstoffs der Formel 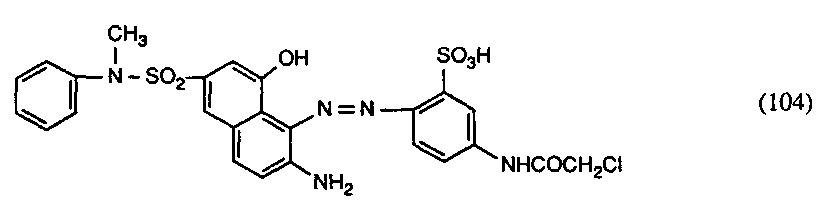 und 18 Teile des in Form der freien Säure angegebenen Farbstoffs der Formel 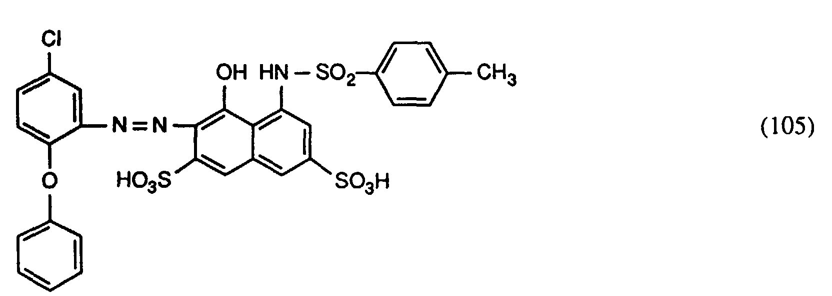 homogen gemischt und ergeben 100 Teile der Mischung, die im folgenden als Farbstoffmischung B bezeichnet wird.

### Beispiel 1c):

Zur Herstellung einer blaufärbenden Farbstoffmischung werden in einem Mixer
55 Teile des in Form der freien Säure angegebenen Farbstoffs der Formel 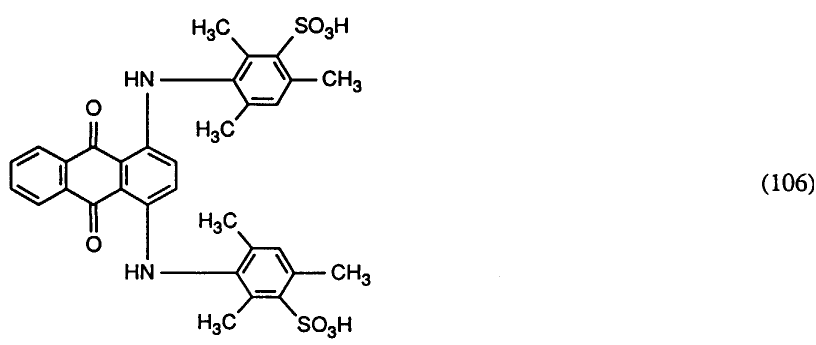 und 45 Teile des in Form der freien Säure angegebenen Farbstoffs der Formel 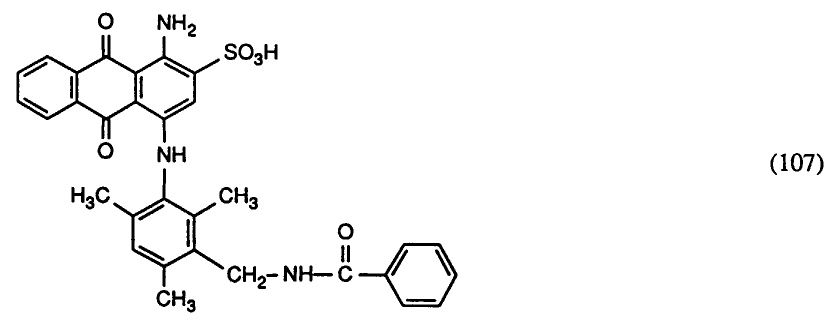 homogen gemischt und ergeben 100 Teile der Mischung, die im folgenden als Farbstoffmischung C bezeichnet wird.

### Beispiel 1d):

Zur Herstellung einer rotfärbenden Farbstoffmischung werden in einem Mixer
23 Teile des in Form der freien Säure angegebenen Farbstoffs der Formel 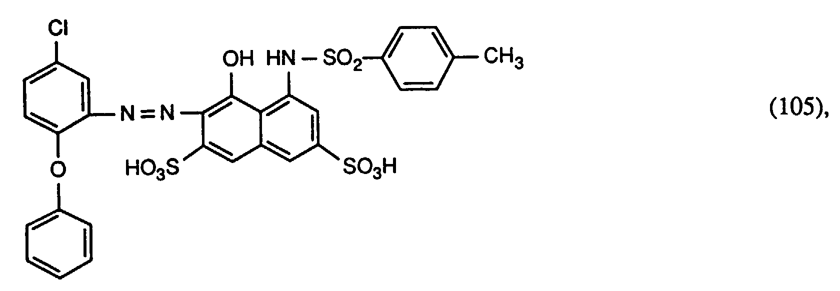 44 Teile des in Form der freien Säure angegebenen Farbstoffs der Formel 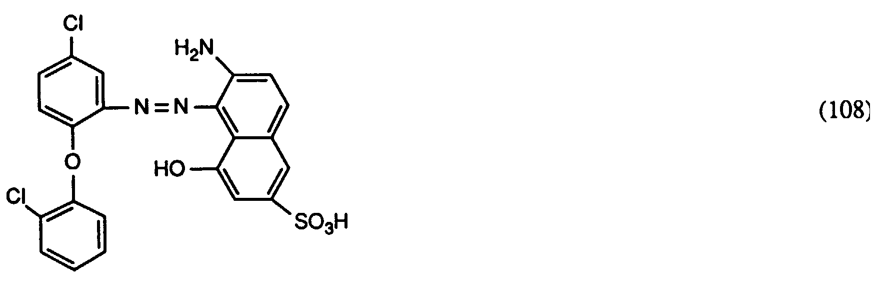 und 33 Teile des in Form der freien Säure angegebenen Farbstoffs der Formel 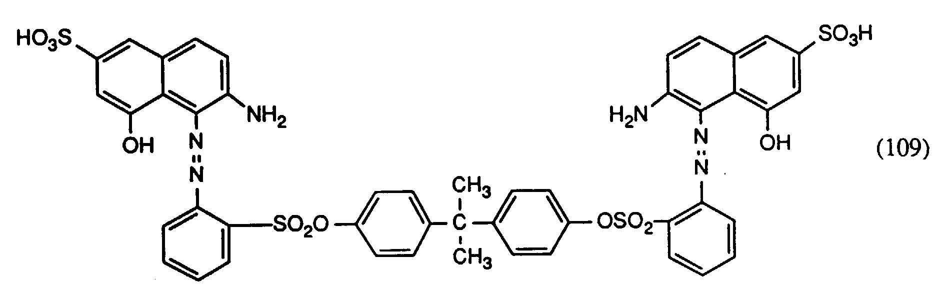 homogen gemischt und ergeben 100 Teile der Mischung, die im folgenden als Farbstoffmischung D bezeichnet wird.

### Beispiel 2:

100 Teile Wollgewebe werden in einem Färbebad, welches auf 1500 Teilen Wasser von 40°C 8 Teile Natriumsulfat, 3 Teile eines Egalisierhilfsmittels der nachstehenden Zusammensetzung:
20 Teile der anionischen Verbindung der Formel 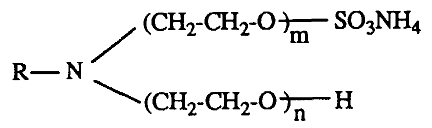 R = C₁₆-C₁₈-Kohlenwasserstoffrest, m + n = 7,5;
20 Teile der quarternaren Verbindung der Formel 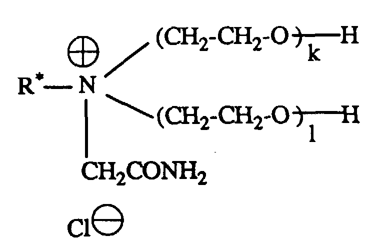 R* = C₁₆-C₁₈-Kohlenwasserstoffrest, k + 1 = 7,5;
5 Teile der quarternären Verbindung der Formel 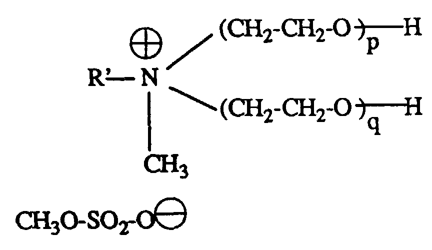 R' = C₁₈-C₂₂-Kohlenwasserstoffrest, p + q = 34; und
5 Teile der Verbindung der Formel 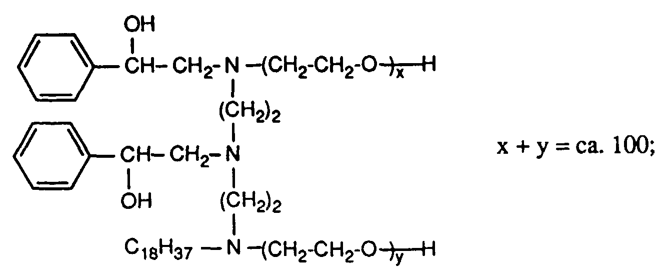 sowie 50 Teile Wasser, bezogen auf 100 Teile des Egalisierhilfsmittelgemisches;
0,15 Teile (NH₄)₂SiF₆ und 4 Teile Ameisensäure (85%) enthält, während 15 Minuten bei einer Temperatur von 40°C vorbehandelt. Der pH-Wert beträgt 3,5. Nach Zugabe einer Lösung enthaltend 1,6 Teile der Farbstoffmischung A wird die Färbeflotte noch 10 Minuten bei 40°C gehalten und anschliessend mit einer Aufheizrate von 1°C pro Minute auf 60°C erwärmt, 20 Minuten bei dieser Temperatur belassen und dann mit einer Aufheizrate von 1°C pro Minute auf 100°C erwärmt. Nach 90 Minuten Färbezeit bei 100°C wird auf 50°C abgekühlt und die Färbeflotte abgelassen. Das gelbgefärbte Wollgewebe wird wie üblich gespült und getrocknet. Die erhaltene Färbung ist faseregal und weist gute Echtheitseigenschaften auf.

### Beispiel 3:

Verfährt man wie in Beispiel 2 angegeben, führt die Färbung jedoch ohne die Zugabe von (NH₄)₂SiF₆ aus, so erhält man ebenfalls eine gelbe Färbung, welche faseregal ist und gute Echtheitseigenschaften aufweist.

### Beispiel 4:

Verfährt man wie in Beispiel 2 angegeben, verwendet jedoch anstelle des in Beispiel 2 angegebenen Egalisierhilfsmittels 1 Teil eines Egalisierhilfsmittels der Formel 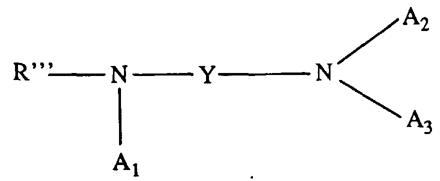 worin R''' ein C₂₂-Kohlenwasserstoffrest, Y n-Propylen ist und A₁, A₂ und A₃ je einen Aethylenoxyrest bedeuten, so erhält man ebenfalls eine gelbe Färbung, welche faseregal ist und gute Echtheitseigenschaften aufweist.

### Beispiele 5 bis 22:

Verfährt man wie in Beispiel 2 angegeben, verwendet jedoch anstelle von 1,6 Teilen der Farbstoffmischung A die in der folgenden Tabelle 1 angegebenen Farbstoffmischungen, oder Mischungen von gelb-, rot- und blaufärbenden Farbstoffmischungen, sowie gegebenenfalls anstelle von 100 Teilen Wollgewebe 100 Teile eines synthetischen Polyamidgewebes (Polyamid 6), so erhält man Färbungen, die die in Tabelle 1 angegebenen Farbtöne aufweisen.

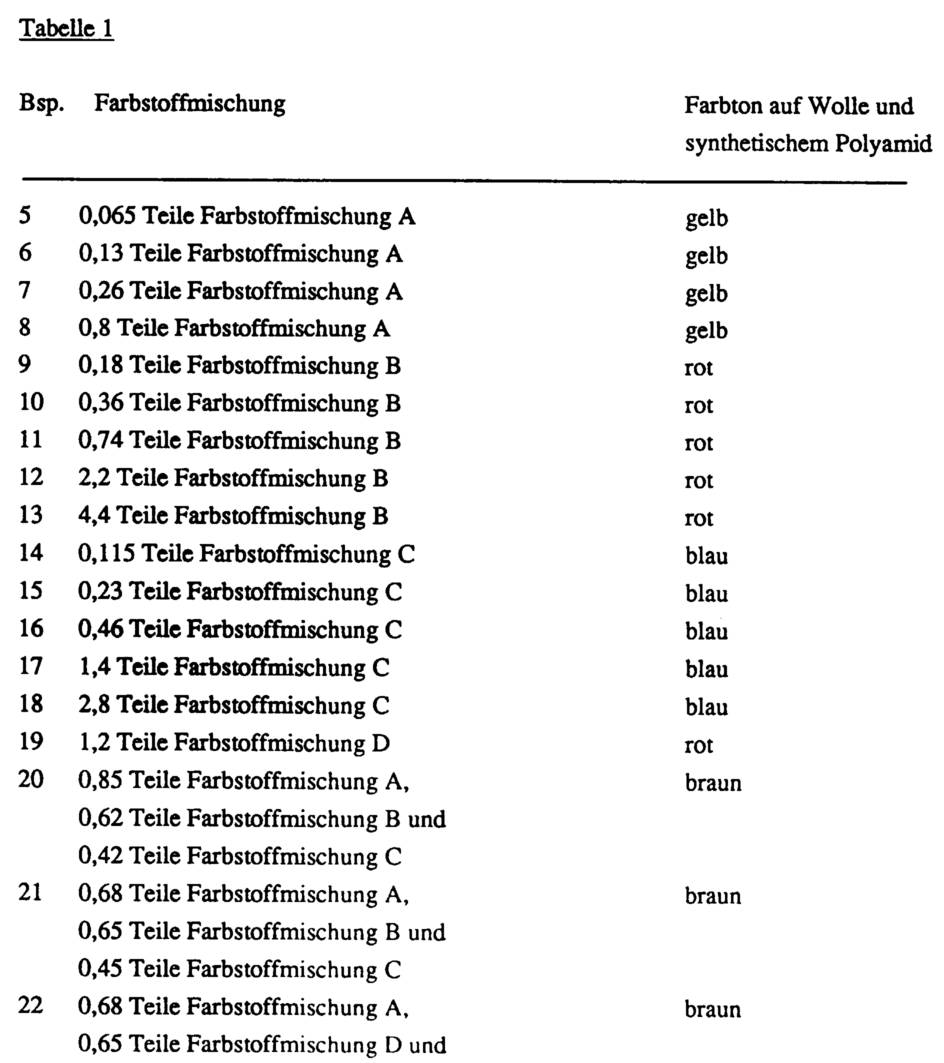

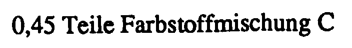

Verfährt man wie in den Beispielen 5 bis 22 angegeben, führt die Färbung jedoch ohne die Zugabe von (NH₄)₂SiF₆ aus, oder verwendet anstelle des in Beispiel 2 angegebenen Egalisierhilfsmittels 1 Teil des in Beispiel 4 angegebenen Egalisierhilfsmittels, so erhält man ebenfalls Färbungen mit den in Tabelle 1 angegebenen Farbtönen.

### Beispiele 23 bis 29:

Verfährt man wie in Beispiel 2 angegeben, gibt jedoch zusätzlich zu Beginn des Färbeprozesses 3 Teile eines Reservierungsmittels (Kondensationsprodukt von aromatischen Sulfonsäuren und Formaldehyd) zu und verwendet anstelle von 1,6 Teilen der Farbstoffmischung A die in der folgenden Tabelle 2 angegebenen Mischungen von gelb-, rot- oder blaufärbenden Farbstoffmischungen, sowie anstelle von 100 Teilen Wollgewebe 100 Teile eines Mischgewebes, welches 80% Wolle und 20% synthetisches Polyamid (Polyamid 6) enthält, so erhält man Färbungen, die die in Tabelle 2 angegebenen Farbtöne aufweisen. Die beiden Faserarten des erhaltene Mischgewebes sind Ton-in-Ton angefärbt.

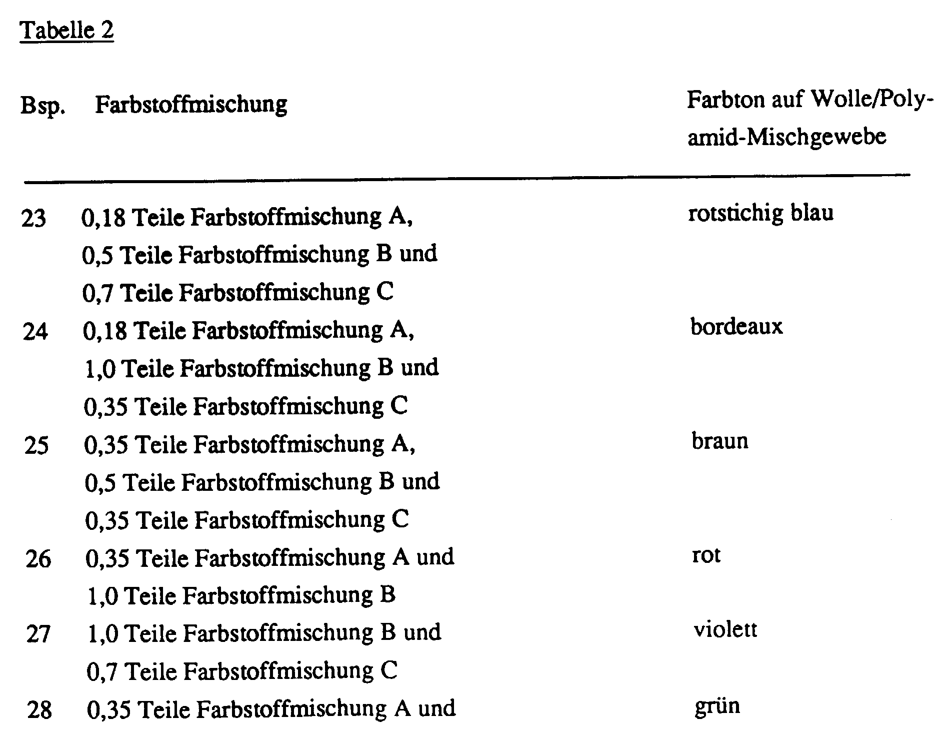

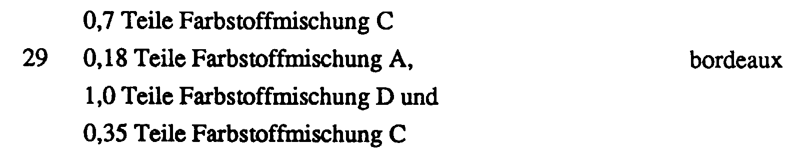

Verfährt man wie in den Beispielen 23 bis 29 angegeben, führt die Färbung jedoch ohne die Zugabe von (NH₄)₂SiF₆ aus, oder verwendet anstelle des in Beispiel 2 angegebenen Egalisierhilfsmittels 1 Teil des in Beispiel 4 angegebenen Egalisierhilfsmittels, so erhält man ebenfalls Färbungen mit den in Tabelle 2 angegebenen Farbtönen.

## Patentansprüche

1. Verfahren zum Färben von Fasermaterialien aus natürlichem oder synthetischem Polyamid aus wässriger Flotte, in Gegenwart eines Egalisierhilfsmittels und gegebenenfalls in Gegenwart eines Alkali- oder Ammoniumfluorosilikats, dadurch gekennzeichnet, dass man
eine Mischung der Farbstoffe der Formeln (1), (2) und (3) 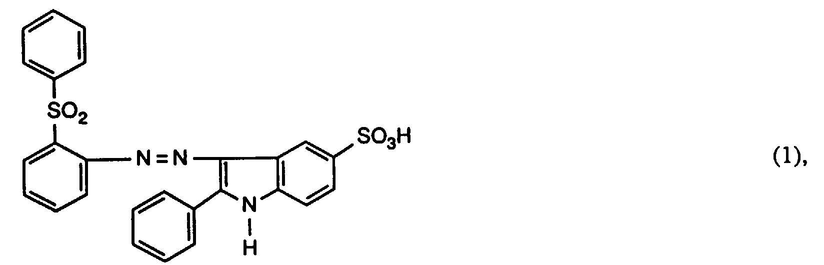 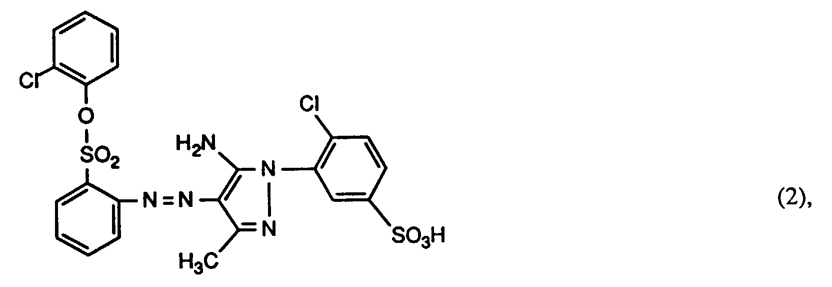 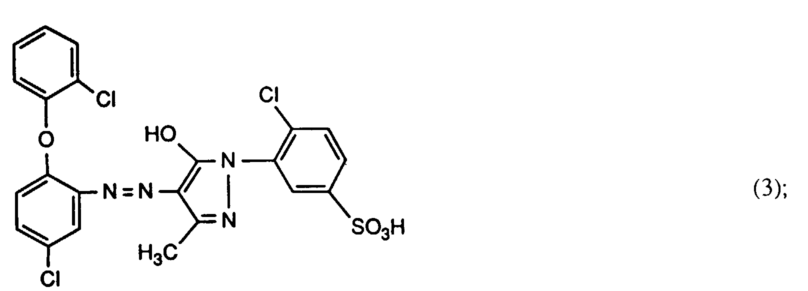 oder eine Mischung der Farbstoffe der Formeln (4) und (5) 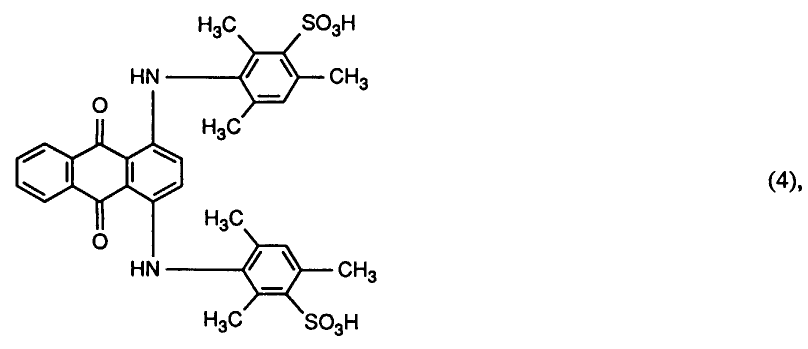 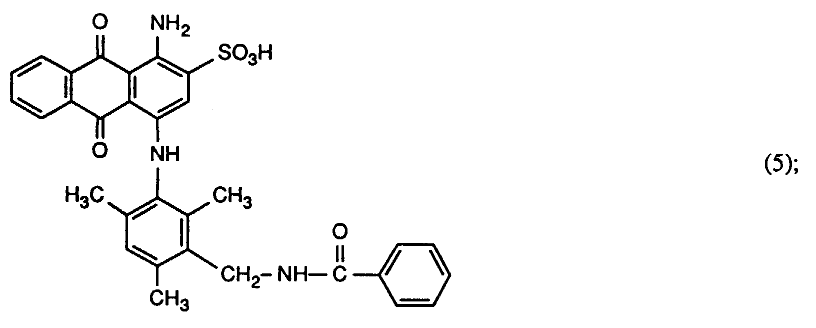 oder eine Mischung, welche einen Farbstoff der Formel (6) 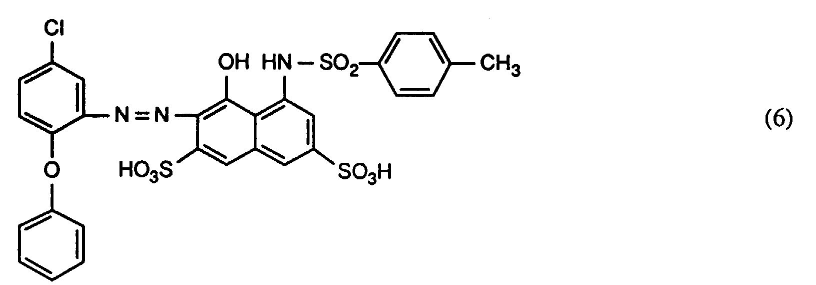 zusammen mit mindestens einem Farbstoff der Formeln (7), (8) und (9) 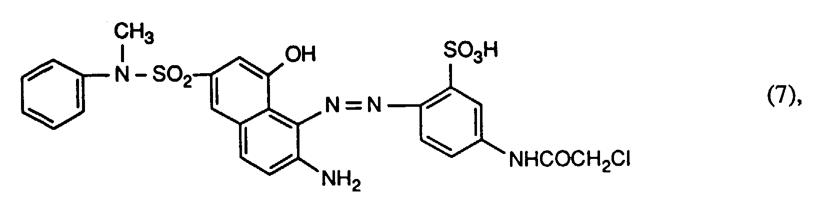 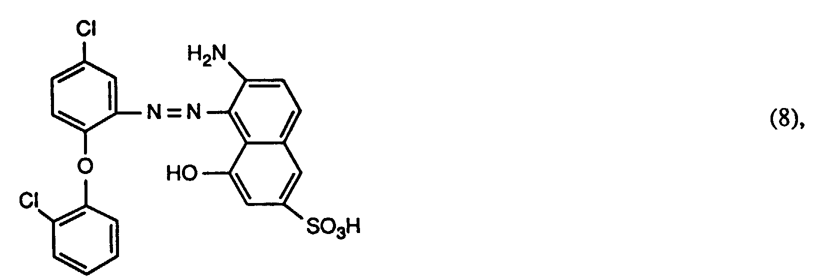 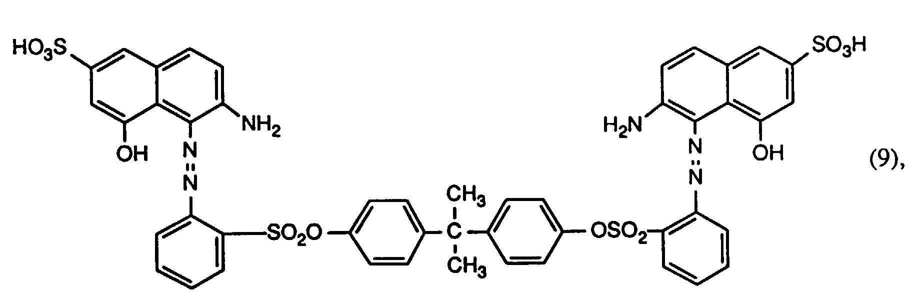 enthält, verwendet.

2. Verfahren gemäss Anspruch 1, dadurch gekennzeichnet, dass das Egalisierhilfsmittel eine Verbindung der Formel 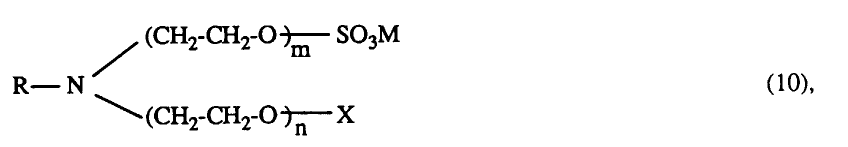 worin X Wasserstoff oder einen Rest der Formel -SO₃M, R einen Alkyl- oder Alkenylrest mit 12 bis 24 Kohlenstoffatomen, M Wasserstoff, Alkalimetall oder Ammonium und m und n ganze Zahlen bedeuten, wobei die Summe von m und n 2 bis 20 ist, 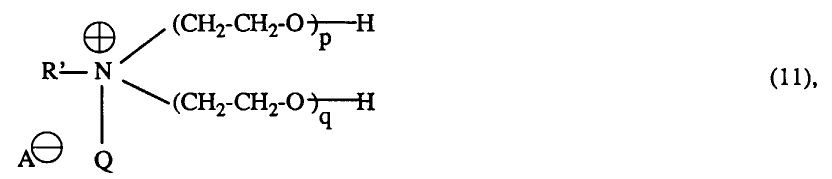 worin R' unabhängig von R die für R angegebene Bedeutung hat, A ein Anion, Q einen gegebenenfalls substituierten Alkykest und p und q ganze Zahlen bedeuten, wobei die Summe von p und q 2 bis 50 ist, und 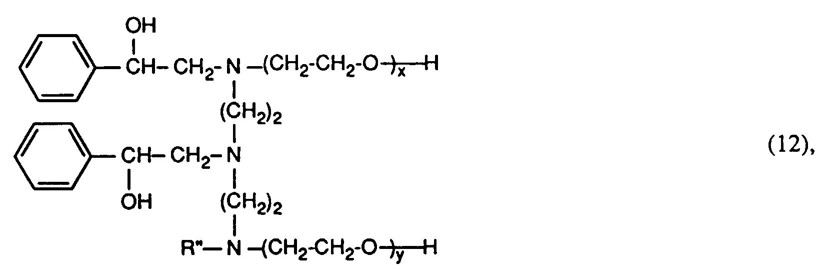 worin R'' unabhängig von R die für R angegebene Bedeutung hat und x und y ganze Zahlen bedeuten, wobei die Summe von x und y 80 bis 140 ist, enthält, oder eine Verbindung der Formel 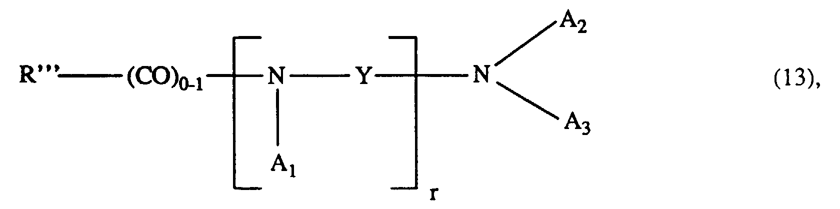 worin R''' C₁₂-C₃₀-Alkyl oder C₁₂-C₃₀-Alkenyl, Y C₂-C₃-Alkylen ist, A₁, A₂ und A₃ jeweils der Rest einer Aethylenoxidanlagerungskette oder
Aethylenoxid/C₃-C₄-Alkylenoxidanlagerungskette, gegebenenfalls unter Anlagerung von Styroloxid, sind, wobei die Verbindung der Formel (13) 3 bis 200 Aethylenoxyeinheiten, 0 bis 100 C₃-C₄-Alkylenoxyeinheiten und gegebenenfalls bis 5 Styroloxyeinheiten enthält, und r 0 oder eine Zahl von 1 bis 6 ist,
enthält.

3. Verfahren gemäss einem der Ansprüche 1 und 2, dadurch gekennzeichnet, dass das Egalisierhilfsmittel die Verbindungen der Formeln (10), (11) und (12) enthält.

4. Verfahren gemäss einem der Ansprüche 1 und 2, dadurch gekennzeichnet, dass das Egalisierhilfsmittel eine Verbindung der Formel (13) enthält und man ohne Gegenwart eines Alkali- oder Ammoniumfluorosilikats färbt.

5. Verfahren gemäss einem der Ansprüche 1 bis 4, dadurch gekennzeichnet, dass man 0,3 bis 5 Gewichtsprozent, bezogen auf das Fasermaterial, des Egalisierhilfsmittels verwendet

6. Verfahren gemäss einem der Ansprüche 1 bis 5, dadurch gekennzeichnet, dass man bei einem pH-Wert von 3 bis 7, insbesondere einem pH-Wert von 3 bis 5, färbt.

7. Verfahren gemäss einem der Ansprüche 1 bis 6, dadurch gekennzeichnet, dass man nach dem Ausziehverfahren bei Temperaturen zwischen 80 und 105°C färbt.

8. Verfahren gemäss einem der Ansprüche 1 bis 7, dadurch gekennzeichnet, dass man bei einem Flottenverhältnis von 1:5 bis 1:80, insbesondere 1:8 bis 1:25, färbt.

9. Verfahren zum Trichromiefärben von Polyamidfasermaterialien, dadurch gekennzeichnet, dass man gemäss einem der Ansprüche 1 bis 8 eine gelb- oder orangefärbende Mischung der Farbstoffe der Formeln (1), (2) und (3) zusammen mit einer blaufärbenden Mischung der Farbstoffe der Formeln (4) und (5) und einer rotfärbenden Mischung, welche den Farbstoff der Formel (6) zusammen mit mindestens einem Farbstoff der Formeln (7), (8) und (9) enthält, verwendet

10. Verfahren gemäss einem der Ansprüche 1 bis 9, dadurch gekennzeichnet, dass man als Fasermaterial synthetisches Polyamidfasermaterial oder Wolle verwendet

11. Verfahren gemäss einem der Ansprüche 1 bis 10, dadurch gekennzeichnet, dass man als Fasermaterial Fasermischungen aus Wolle und synthetischem Polyamidfasermaterial verwendet

12. Farbstoffmischungen, dadurch gekennzeichnet, dass sie
die Farbstoffe der Formeln (1), (2) und (3) 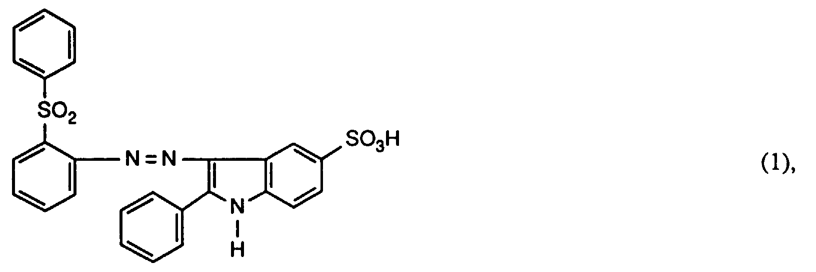 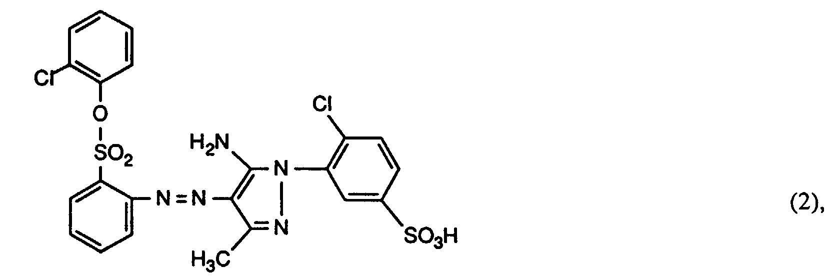 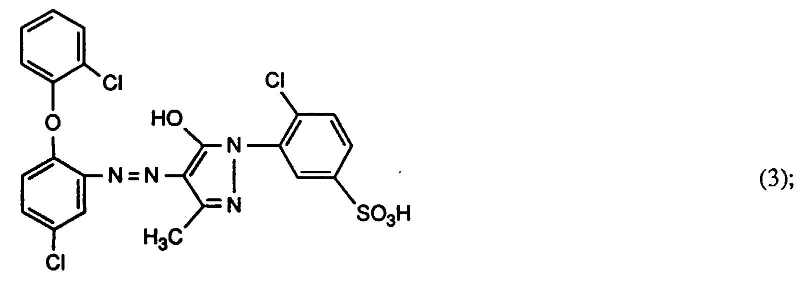 oder die Farbstoffe der Formeln (4) und (5) 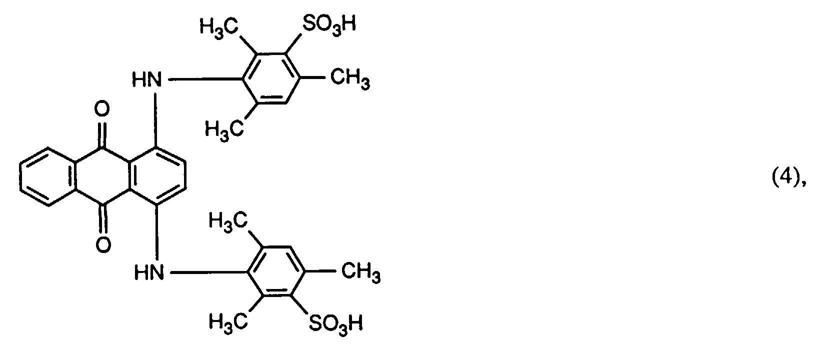 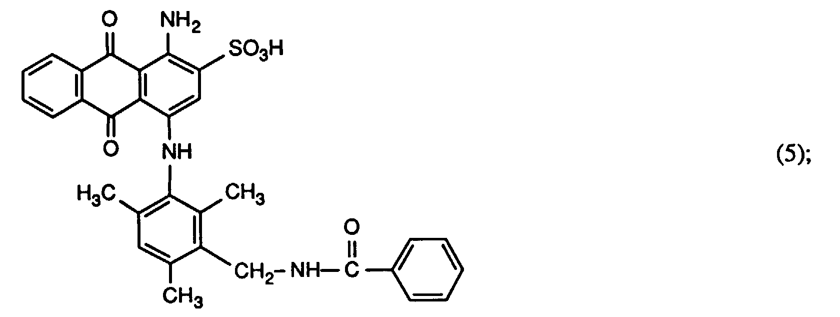 oder einen Farbstoff der Formel (6) 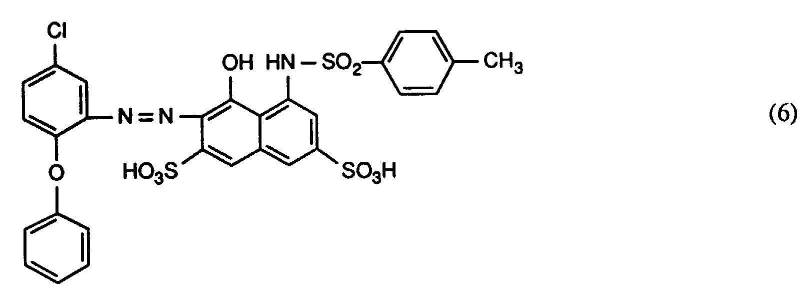 zusammen mit mindestens einem Farbstoff der Formeln (7), (8) und (9) 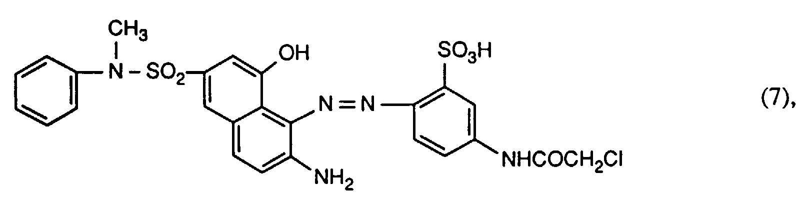 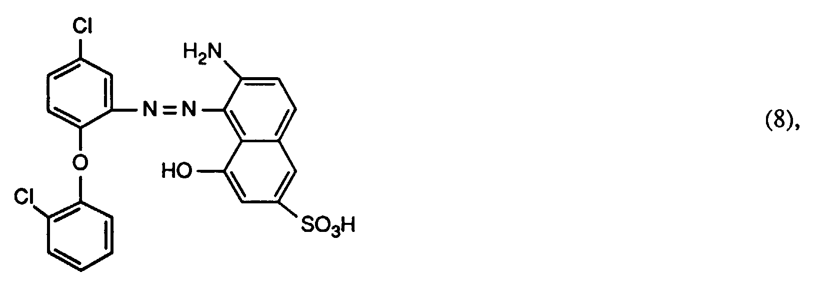 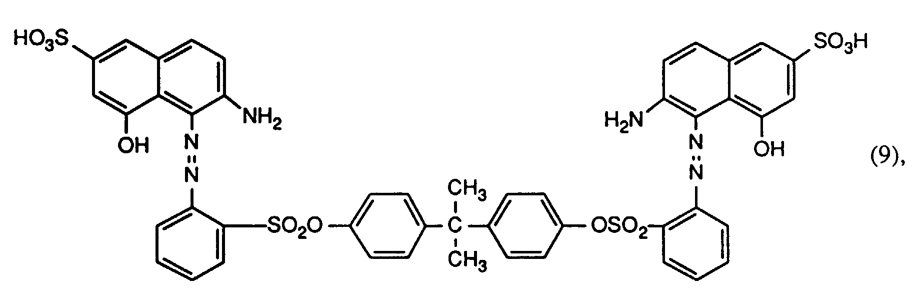 enthalten.

## Claims

1. A process for dyeing natural or synthetic polyamide fibre material from an aqueous liquor in the presence of a levelling assistant and in the presence or absence of an alkali metal fluorosilicate or ammonium fluorosilicate, which process comprises the use of a mixture of dyes of formulae (1), (2) and (3) 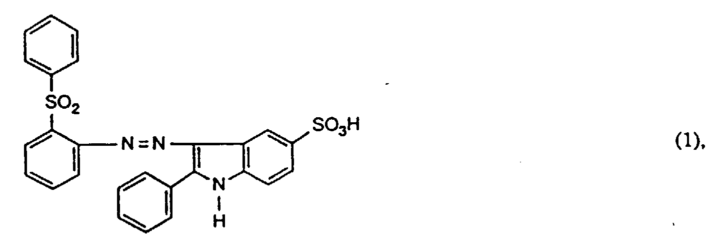 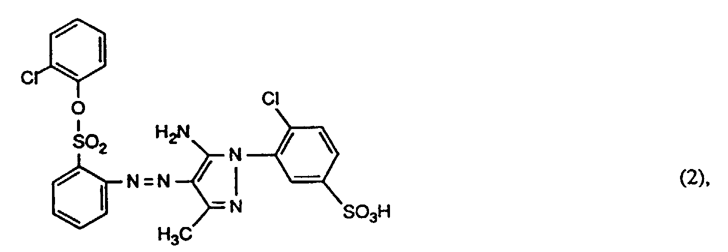 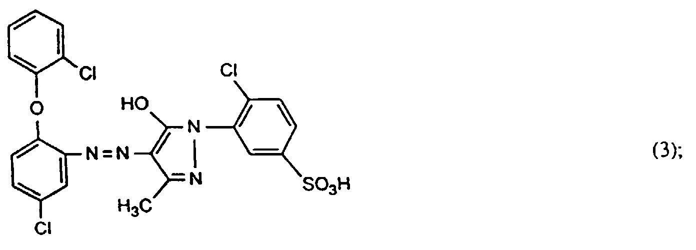 or a mixture of dyes of formulae (4) and (5) 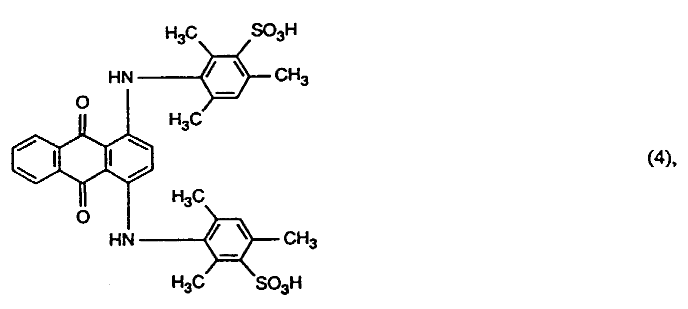 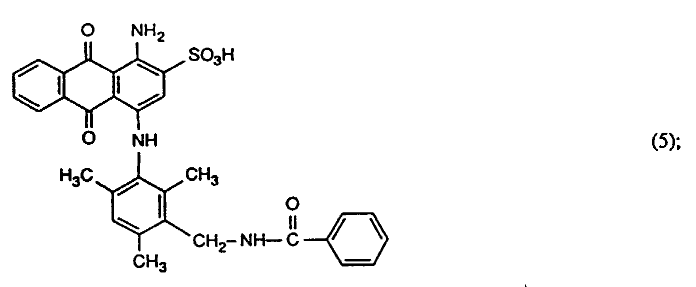 or a mixture that comprises a dye of formula (6) 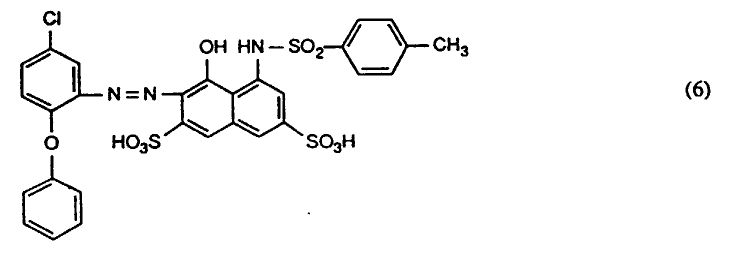 together with at least one dye of formulae (7), (8) and (9)

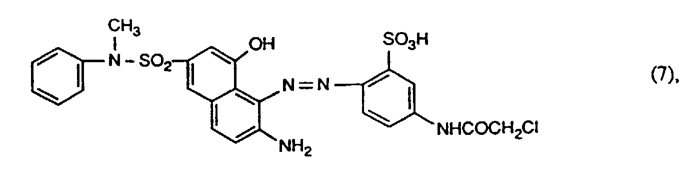

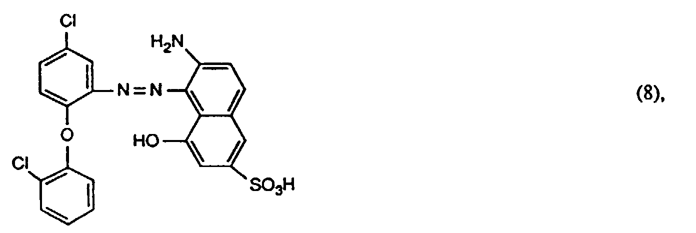

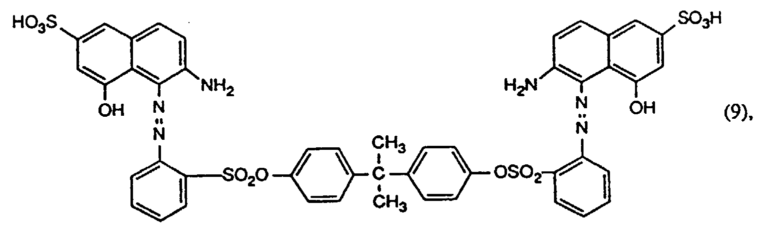

2. A process according to claim 1, wherein the levelling assistant comprises a compound of formula 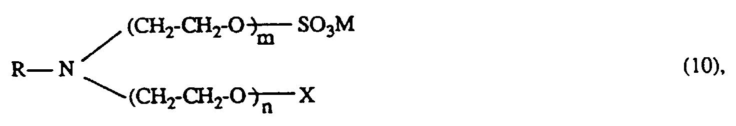 wherein X is hydrogen or a radical of formula -SO₃M, R is alkyl or alkenyl of 12 to 24 carbon atoms, M is hydrogen, alkali metal or ammonium, and m and n are whole numbers, the sum of m and n being 2 to 20, 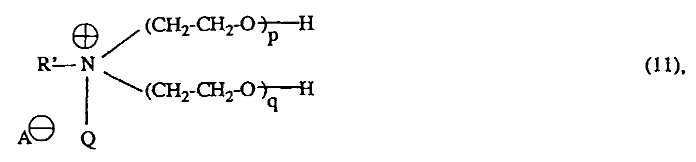 wherein R', independently of R, has the meaning of R, A is an anion, Q is an unsubstituted or substituted alkyl radical and p and q are whole numbers, the sum of p and q being 2 to 50, and 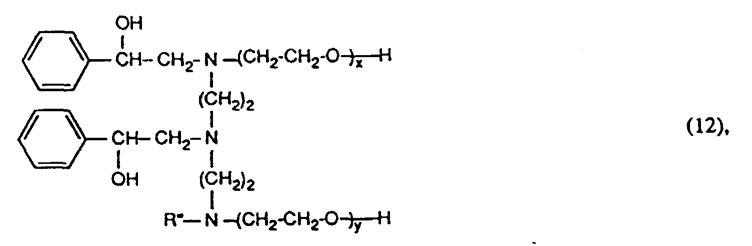 wherein R", independently of R, has the meaning of R, and x and y are whole numbers, the sum of x and y being 80 to 140;
or the levelling assistant comprises a compound of formula 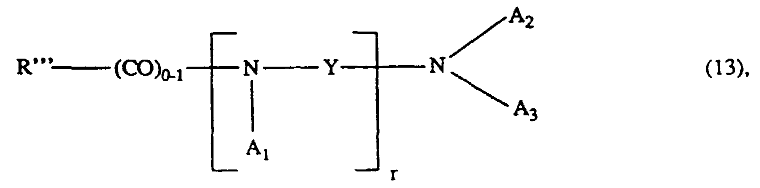 wherein R''' is C₁₂-C₃₀alkyl or C₁₂-C₃₀alkenyl, Y is C₂-C₃alkylene, A₁, A₂ and A₃ are each the radical of an ethylene oxide addition chain or of an ethylene oxide/C₃-C₄alkylene oxide addition chain to which styrene oxide may be added, the compound of formula (13) containing 3 to 200 ethyleneoxy units, 0 to 100 C₃-C₄alkyleneoxy units and, where appropriate, up to 5 styreneoxy units, and r is 0 or a number from 1 to 6.

3. A process according to either claim 1 or claim 2, wherein the levelling assistant comprises the compounds of formulae (10), (11) and (12).

4. A process according to either claim 1 or claim 2, wherein the levelling assistant comprises a compound of formula (13) and dyeing is carried out in the absence of an alkali metal fluorosilicate or ammonium fluorosilicate.

5. A process according to any one of claims 1 to 4, wherein 0.3 to 5 per cent by weight of levelling assistant is used, based on the fibre material.

6. A process according to any one of claims 1 to 5, wherein dyeing is carried out at a pH from 3 to 7, especially from 3 to 5.

7. A process according to any one of claims 1 to 6, wherein dyeing is carried out by the exhaust process at a temperature between 80 and 105°C.

8. A process according to any one of claims 1 to 7, wherein dyeing is carried out at a liquor ratio from 1:5 to 1:80, especially from 1:8 to 1:25.

9. A process for dyeing polyamide fibre materials by the trichromatic technique, which comprises the use according to any one of claims 1 to 8 of a yellow or orange dyeing mixture of the dyes of formulae (1), (2) and (3) together with a blue dyeing mixture of the dyes of formulae (4) and (5) and a red dyeing mixture that contains the dye of formula (6) together with at least one dye of formulae (7), (8) and (9).

10. A process according to any one of claims 1 to 9, wherein the fibre material used is synthetic polyamide fibre material or wool.

11. A process according to any one of claims 1 to 10, wherein the fibre material used is a blend of wool and synthetic polyamide fibre material.

12. A dye mixture which comprises the dyes of formulae (1), (2) and (3) 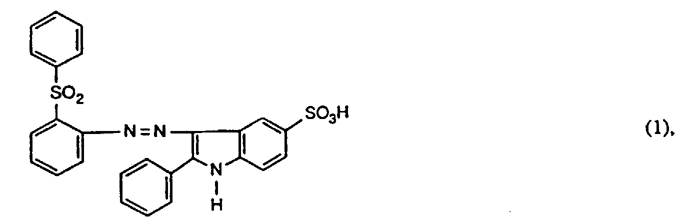 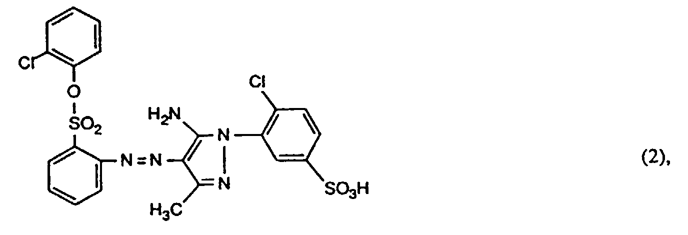 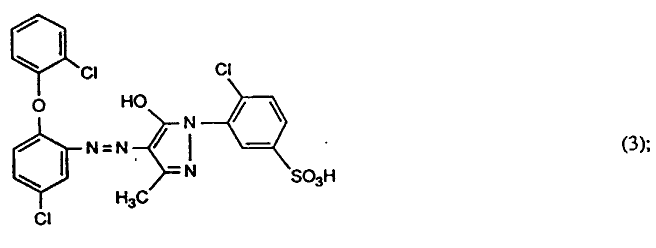 or the dyes of formulae (4) and (5) 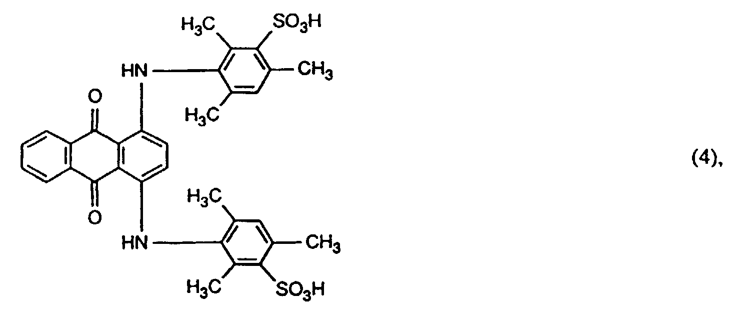 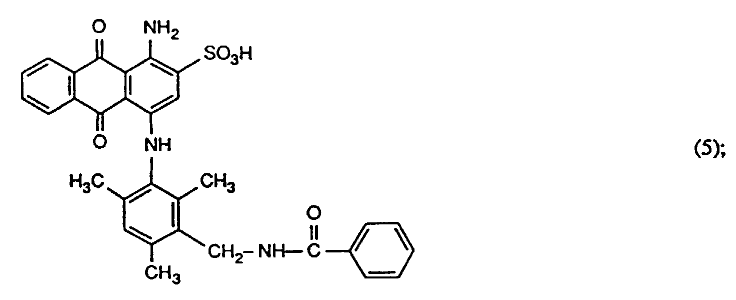 or a dye of formula (6) 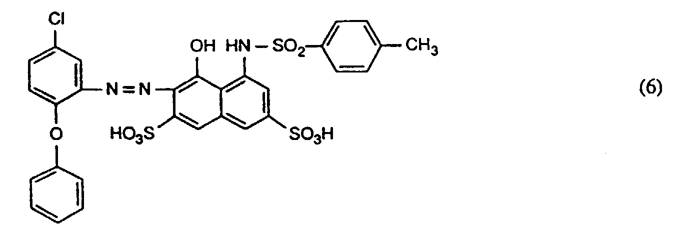 together with at least one dye of formulae (7), (8) and (9)

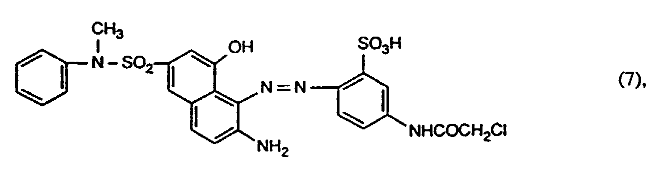

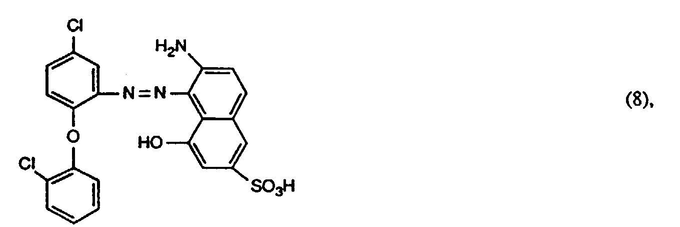

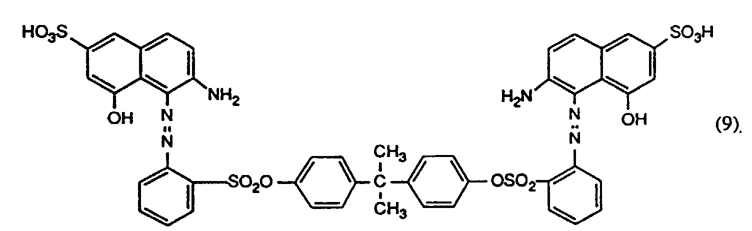

## Revendications

1. Procédé pour la teinture de matériaux fibreux en polyamide naturel ou synthétique dans des bains aqueux, en présence d'un agent d'unisson et, éventuellement, en présence d'un fluorosilicate de métal alcalin ou d'ammonium, caractérisé en ce que l'on utilise un mélange de colorants de formule (1), (2) et (3) 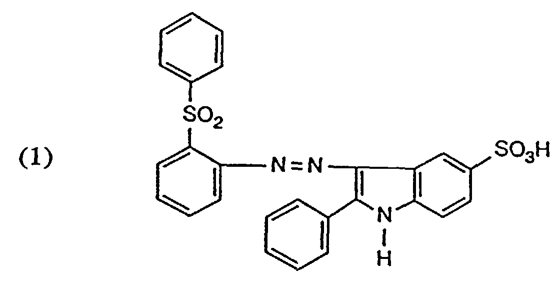 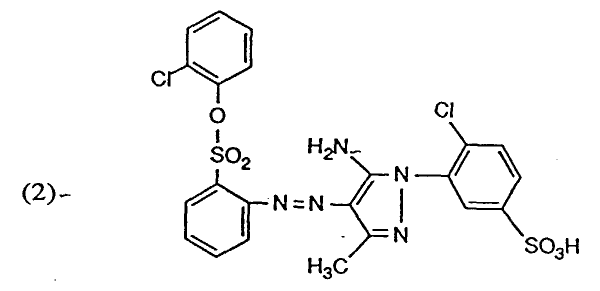 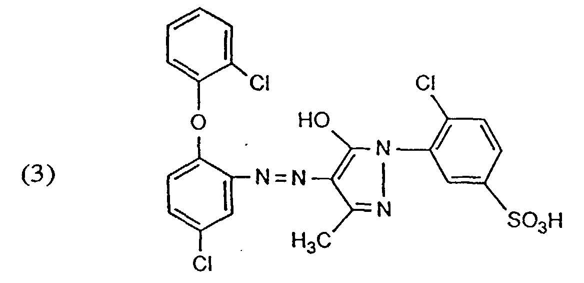 ou un mélange de colorants de formule (4) et (5) 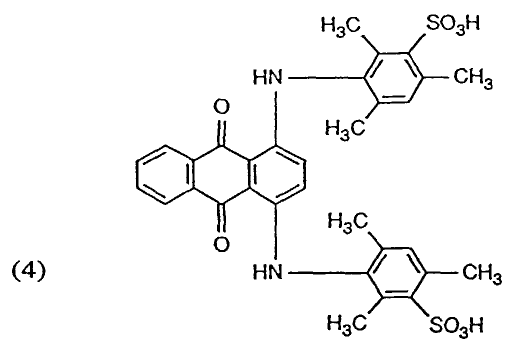 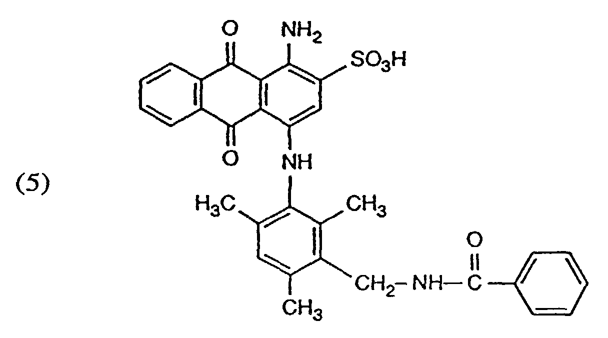 ou un mélange contenant un colorant de formule (6) 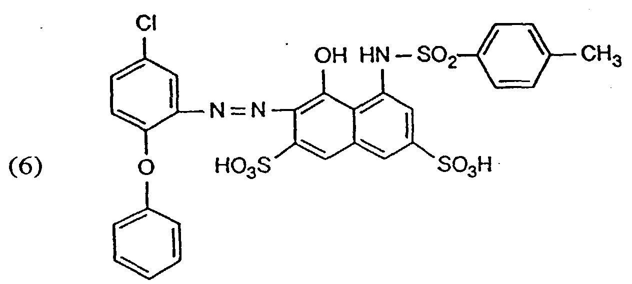 en combinaison avec un colorant de formule (7), (8) et (9)

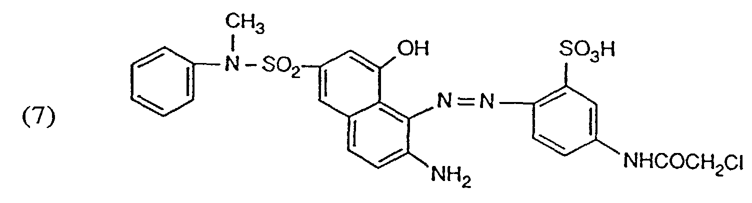

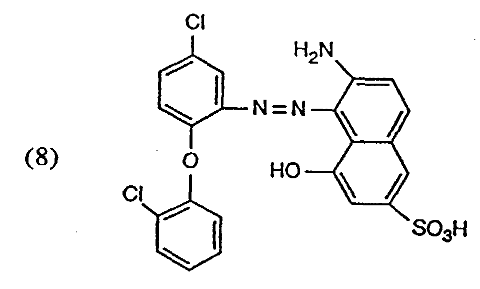

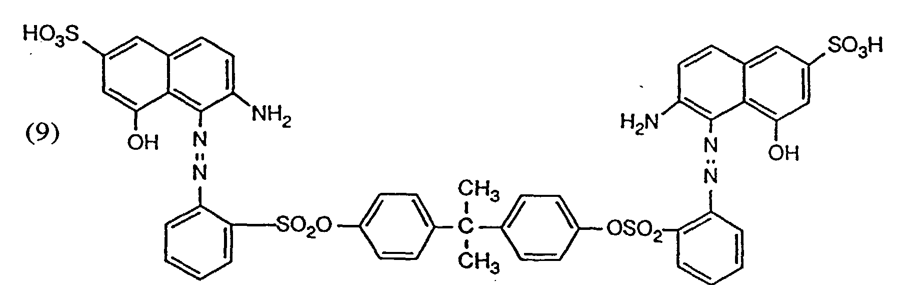

2. Procédé conforme à la revendication 1, caractérisé en ce que l'agent d'unisson contient un composé de formule 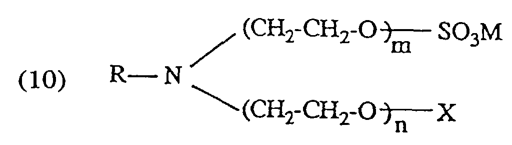 dans laquelle X représente un atome d'hydrogène ou un résidu de formule -SO₃M, R représente un résidu alkyle ou alcényle comportant de 12 à 24 atomes de carbone, M représente un atome d'hydrogène, un métal alcalin ou un ion ammonium et met n sont des nombres entiers, la somme de m et n étant comprise entre 2 et 20, 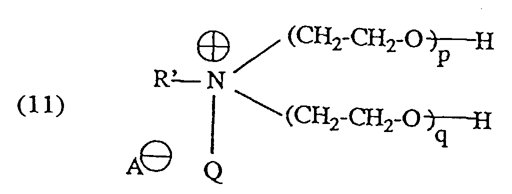 dans laquelle R', indépendamment de R, a la signification de R, A est un anion, Q un résidu alkyle éventuellement substitué et p et q des nombres entiers, la somme de p et q étant comprise entre 2 et 50, et 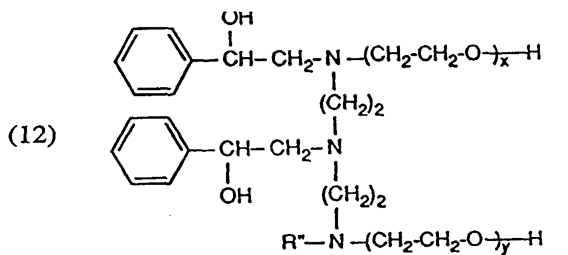 dans laquelle R", indépendamment de R, a la signification de R et x et y sont des nombres entiers, la somme de x et y étant comprise entre 80 et 140, ou contenant un composé de formule 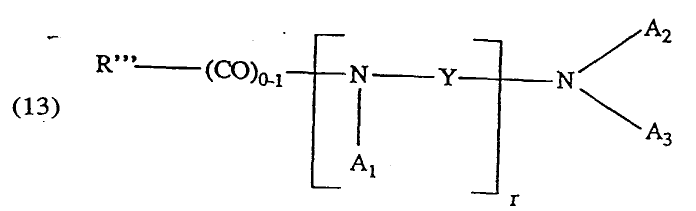 dans laquelle R"' représente un groupe alkyle en C₁₂₋₃₀ ou alcényle en C₁₂₋₃₀, Y représente un groupe alkylène en C₂₋₃, A₁, A₂ et A₃ représentent chacun le résidu d'une chaîne d'éthoxylation ou d'addition d'oxyde d'éthylène et d'oxyde d'alkylène en C₃₋₄, éventuellement avec addition d'oxyde de styrène, le composé de formule (13) contenant de 3 à 200 motifs d'oxyde d'éthylène, de 0 à 100 motifs d'oxyde alkylène en C₃₋₄ et, éventuellement, jusqu'à 5 motifs d'oxyde de styrène, et r est égal à zéro ou vaut de 1 à 6.

3. Procédé conforme à une des revendications 1 et 2, caractérisé en ce que l'agent d'unisson contient les composés de formule (10), (11) et (12).

4. Procédé conforme à une des revendications 1 et 2, caractérisé en ce que l'agent d'unisson contient un composé de formule (13) et en ce que l'on réalise la teinture en absence de fluorosilicate de métal alcalin ou d'ammonium.

5. Procédé conforme à une des revendications 1 à 4, caractérisé en ce que l'on utilise de 0,3 à 5 % en poids de l'agent d'unisson, rapportés au matériau fibreux.

6. Procédé conforme à une des revendications 1 à 5, caractérisé en ce que l'on teint à un pH compris entre 3 et 7, en particulier à un pH compris entre 3 et 5.

7. Procédé conforme à une des revendications 1 à 6, caractérisé en ce que l'on teint selon un procédé par épuisement à des températures comprises entre 80 et 105 °C.

8. Procédé conforme à une des revendications 1 à 7, caractérisé en ce que l'on teint avec un rapport de bain compris entre 1/5 et 1/80, en particulier entre 1/8 et 1/25.

9. Procédé pour la teinture en trichromie de matériaux fibreux en polyamide, caractérisé en ce que l'on utilise, conformément à une des revendications 1 à 8, un mélange de colorants jaunes ou oranges de formule (1), (2) et (3), en combinaison avec un mélange de colorants bleus de formule (4) et (5) et un mélange de colorants rouges, contenant le colorant de formule (6) et au moins un colorant de formule (7), (8) et (9).

10. Procédé conforme à une des revendications 1 à 9, caractérisé en ce que l'on utilise, comme matériau fibreux, un matériau fibreux en polyamide synthétique ou de la laine.

11. Procédé conforme à une des revendications 1 à 10, caractérisé en ce que l'on utilise, comme matériau fibreux, des mélanges de fibres de laine et de fibres en polyamide synthétique.

12. Mélanges de colorants, caractérisé en ce qu'ils contiennent les colorants de formule (1), (2) et (3), 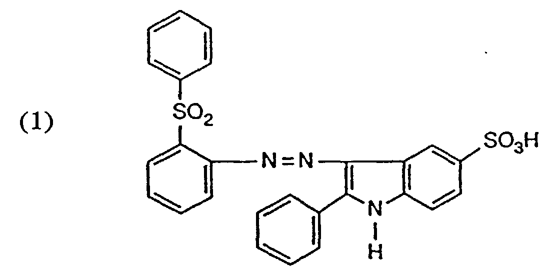 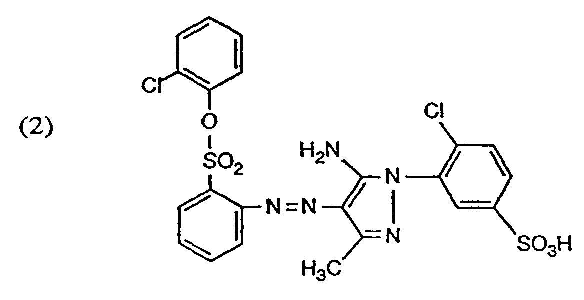 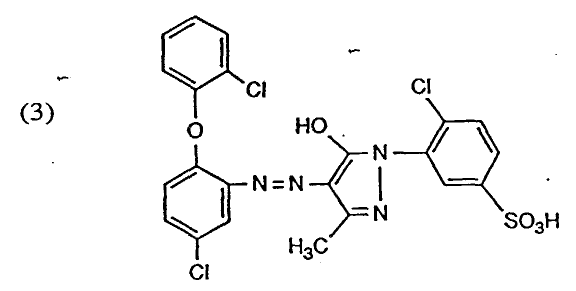 ou les colorants de formule (4) et (5) 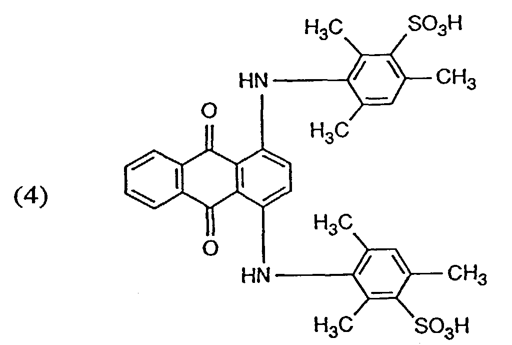 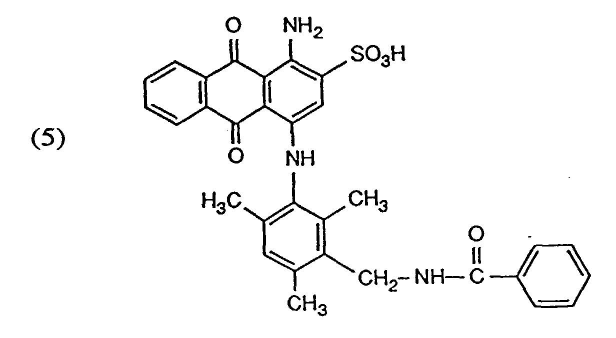 ou un colorant de formule (6) 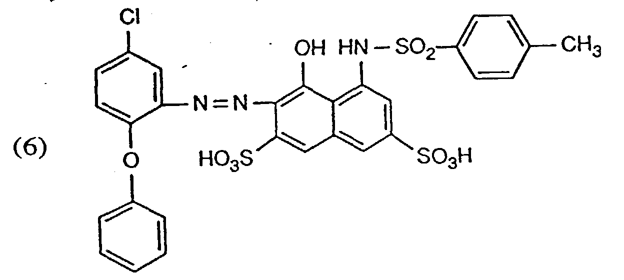 en combinaison avec au moins un colorant de formule (7), (8) et (9)
